# EUROPEAN PATENT APPLICATION

(11) **EP 1 179 467 A2**
(43) Date of publication of application: **13.02.2002**
(21) Application number: 01850133.8
(22) Date of filing: 02.08.2001
(51) Int. Cl.: B62B 17/02

(54) **Ski for a vehicle**

(30) Priority: 09.08.2000 US 657483
(71) Applicant: Arctic Cat Inc., Thief River Falls, Minnesota 56701 (US)
(72) Inventor: Lund, Jerome Edward, Middle River, Minnesota 56737 (US); Howell, Jason William, Thief River Falls, Minnesota 56701 (US)
(74) Representative: Rostovanyi, Peter

(57) **Abstract**

A ski (10) for a vehicle for slidably engaging a surface to be traversed. The ski includes a longitudinally extending runner having a forward portion (12), a rearward portion (14) and a middle portion (16) therebetween, the forward and rearward portions having a wider lateral width than the middle portion. The forward, rear and middle portions form an hourglass shape, generally. One or more skis may be adapted to a vehicle that includes a frame, a rear drive means for propelling the vehicle along a surface to be traversed and the one or more skis may be attached to a front portion of the frame for slidably engaging the surface to be traversed.

## Description

### TECHNICAL FIELD

The present invention relates to a ski for a vehicle. More particularly, the present invention relates to a ski for mounting to a vehicle and slidably engaging a surface to be traversed.

### BACKGROUND

Conventional skis mounted on vehicles suffer from several disadvantages when traversing surfaces covered with snow of different types, for example, powder snow or hard packed snow. When traversing powder snow, conventional skis do not provide adequate floatation to the vehicle. Making the ski wider generally increases the floatation, however, if the skis are made wider than conventional skis in order to increase the floatation in powder snow, the vehicle has reduced turning ability when traversing hard packed snow. Therefore, conventional skis optimized for one type of surface (e.g., powder snow) are not optimized for another type of surface (e.g., hard packed snow).

### SUMMARY

The present invention relates generally to a ski for a vehicle. More particularly the invention relates to a ski for mounting to a vehicle for slidably engaging a surface to be traversed. For example, the ski may be mounted to a snowmobile or other recreational type vehicle. The ski has an hourglass contour, generally. For example, the front and rear portions of the ski are wider than a slender middle portion located therebetween. The wider portions of the ski provide floatation in generally powdered snow, and the slender portion provides greater turning capability than would otherwise be obtainable from a ski having a single width.

One aspect of the invention provides a ski for a vehicle including a longitudinally extending runner having a forward portion, a rearward portion and a middle portion therebetween, the forward and rearward portions having a wider lateral width than the middle portion.

Another alternative aspect of the invention provides a vehicle including a frame; a rear drive means for propelling the vehicle along a surface to be traversed; and one or more skis attached to a front portion of the frame for slidably engaging the surface to be traversed. The one or more skis include a longitudinally extending runner having a forward portion, a rearward portion and a middle portion therebetween, the forward and rearward portions having a wider lateral width than the middle portion.

Still another alternative aspect of the invention provides a ski including a longitudinally extending runner having a forward portion, a rearward portion and a middle portion therebetween, the longitudinally extending runner having an hourglass shape.

For a better understanding of the invention reference should be made to the drawings which form a further part hereof, and to the accompanying descriptive matter, in which there are illustrated and described specific examples in accordance with the invention.

### BRIEF DESCRIPTION OF THE DRAWINGS

Referring now to the drawings in which like reference numbers represent corresponding parts throughout the several views, where:

Fig. 1 is an illustration of one embodiment of a ski according to the present invention.

Fig. 2 is a sectional view of one embodiment of a ski.

Fig. 3 is a perspective view of one embodiment of a ski, illustrating also a shoe and a portion of a vehicle.

Fig. 4 is an illustration of one embodiment of a ski, illustrating also a saddle attached thereto.

### DETAILED DESCRIPTION OF THE ILLUSTRATED EMBODIMENTS

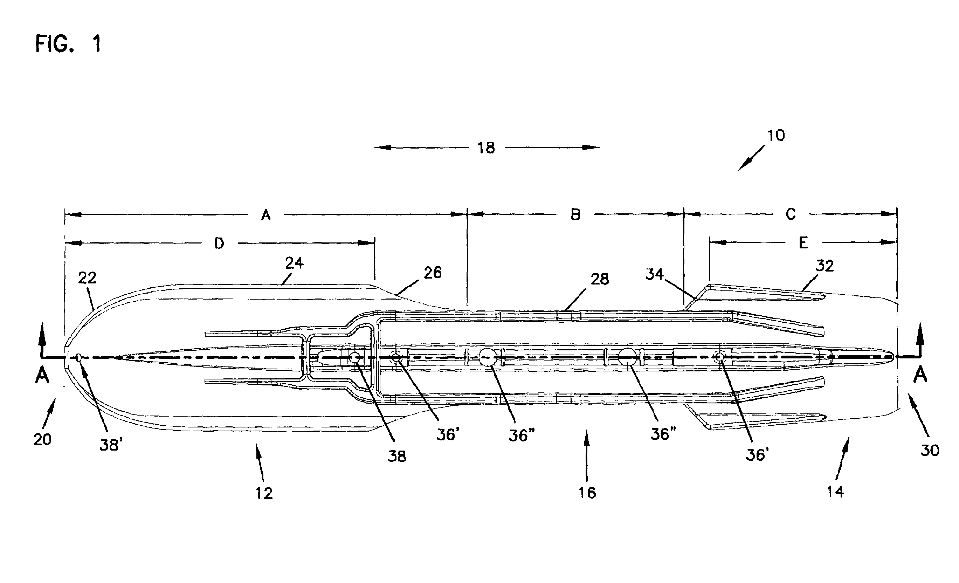

In the following description of specific embodiments, reference is made to the accompanying drawings which form a part hereof, and in which is shown by way of illustration specific embodiments in which the invention may be practiced. It is to be understood that other embodiments may be made and used without departing from the scope of the invention, which is defined by claims attached hereto. It is also to be understood that Figs. 1 through 4 are generally drawn to scale.

In one embodiment, the present invention provides a ski having a front portion, the tip, and a rear portion, the tail, which are wider than a middle portion defined therebetween. The shape of the ski is similar to an hourglass shape. In other words, the shape of the ski is wider at the tip and tail and is slender in the middle. This hourglass structure provides several advantages when one or more skis are attached to a vehicle (e.g., a recreational vehicle such as a snowmobile).

The wider tip and tail portions of the skis increase the floatation of a vehicle attached thereto when operating in powder snow conditions. This is in contrast to skis having a uniform width along their longitudinal length which are optimized for traversing hard packed snow. The narrower, slender, middle portion of the skis according to the present invention provides added controllability of the vehicle when it is operated in hard packed snow. This is in contrast to skis having uniform widths along their longitudinal length which are optimized for traversing powder snow.

In one embodiment, the present invention provides a vehicle including one or more skis having a wider tip and tail portion relative to a narrower, slender, middle portion therebetween. As discussed above, the wider tip and tail portions provide added floatation to the vehicle when it is operated in powder snow, and the narrower, slender, middle portion (e.g., forming an hourglass shape) provides increased control of the vehicle when operating in hard packed snow. The combination of wider tip and tail and narrower, slender, middle portion provides a vehicle that is optimized for traversing powder snow with added floatation while maintaining controllability of the vehicle when turning on hard pack snow.

Turning now to Fig. 1, a ski 10 in accordance with the present invention is shown. The ski 10 includes a runner extending along the longitudinal direction 18 having a forward portion 12 (the tip), a rearward portion 14 (the tail), and a middle portion 16 therebetween. The forward portion 12 and the rearward portion 14 have a wider lateral width relative to the middle portion 16. In one embodiment, the proportional relative lengths of the forward portion 12, middle portion 16 and rearward portion 14 along the longitudinal direction 18 are approximately as indicated by sections A, B and C, respectively. As indicated above, Fig. 1 is generally drawn to scale.

The forward portion 12 of the ski 10, beginning at a frontmost portion 20 of the longitudinally extending runner, is formed having an upwardly projecting arcuate portion 22 which extends lengthwise along a longitudinal direction of the runner toward the rearward portion 14 of the runner for a given length (section D). A length of the forward portion, indicated by reference numeral 24, proceeds without such an arcuate projection. However, it will be appreciated by those skilled in the art that the entire length could be made arcuate if desired, without departing from the scope of the invention. The runner also has a portion 26 that projects inwardly towards a lateral edge 28 of the middle portion 16 and abuts the lateral edge 28 of the middle portion 16.

Furthermore, the middle portion 16 of the ski 10 is formed so as to be narrower relative to the forward portion 12 and the rearward portion 14 of the ski 10, in order to improve the steerability of the ski 10 on hard pack. It will be appreciated that if section D of the forward portion 12 is too short, the forward portion 12 will not make contact with the snow. Moreover, if section D of the front portion 12 extends too far towards the rear of the ski 10, the length of the middle portion 16 (section B) will be too short to provide adequate steering. Through experimentation, a ski 10 having the proportional dimensions indicated in Fig. 1, was found to provide the desired combined result of added floatation in powder snow and increased controllability in hard pack snow.

The rearward portion 14 of the ski 10, beginning at a rearmost portion 30 of the longitudinally extending runner, is formed having an upwardly and outwardly projecting portion 32 which extends lengthwise along a longitudinal direction of the runner toward the forward portion 12 of the runner for a given length (section E). The rearward portion 14 is formed so as to be wider than the middle portion 16 in order to prevent the ski from "rut" steering or from moving side to side out of control while the ski is moving forward (e.g., fishtailing). The runner also has a portion 34 that projects inwardly towards the lateral edge 28 of the middle portion 16 and abuts the lateral edge 28 of the middle portion 16. In one embodiment, the lateral edge 28 of the middle portion along a longitudinally extending portion of the runner is straight.

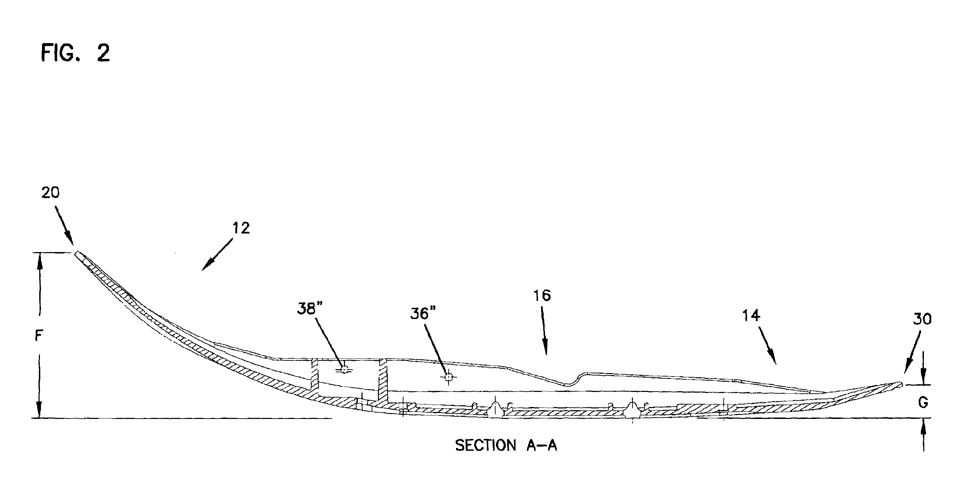

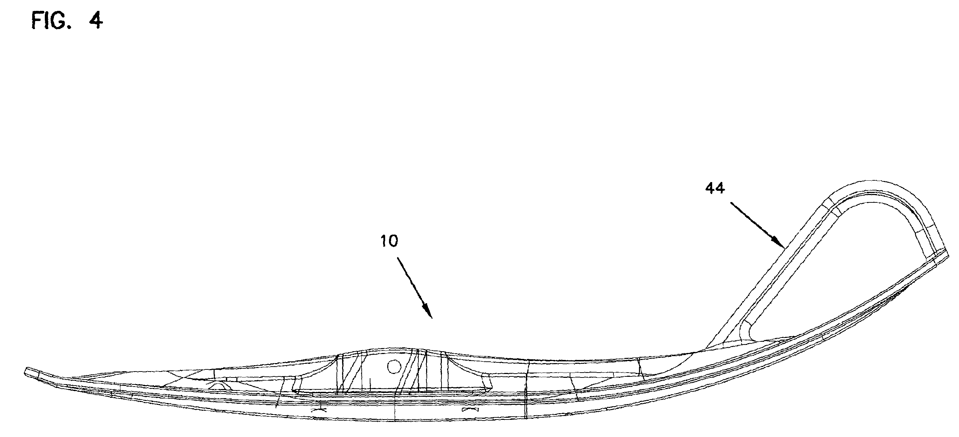

Mounting means for attaching the ski 10 to a vehicle (e.g., a snowmobile) may be provided through openings in the ski 10. For example, as is illustrated in Figs. 1 and 2, openings 36, 36', 36", and 36''' are provided. As is illustrated in Fig. 4, it is envisioned that these openings may be used to attach the ski 10 to a shoe 40 and a vehicle, a portion of which is represented by 42. However, it will be appreciated by those skilled in the art that this configuration is exemplary only, and that other arrangements of holes or other mounting means entirely may be equally suitable.

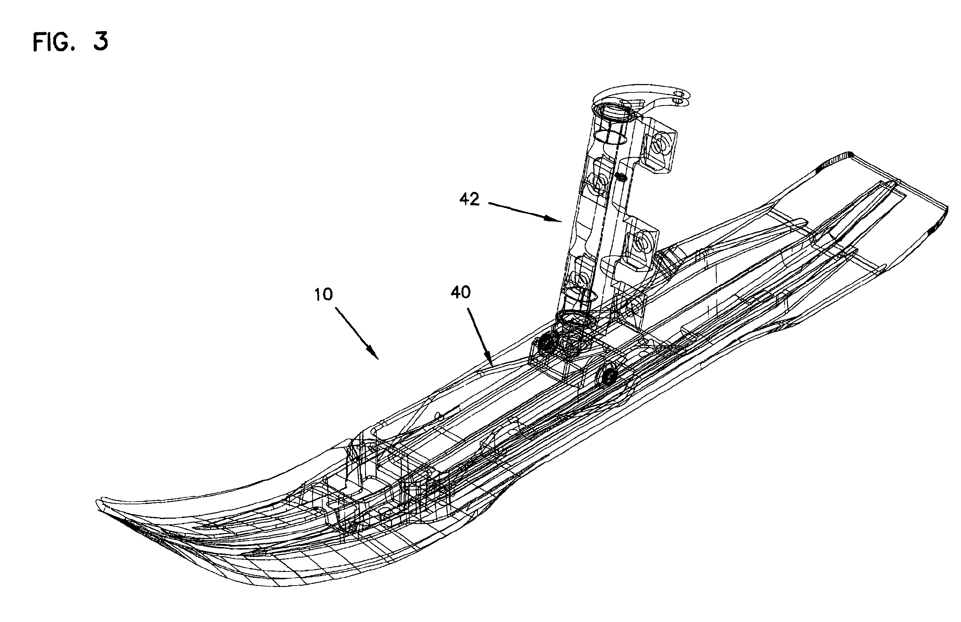

Mounting means for attaching to the ski 10 a saddle 44 for stiffening the forward portion 12 of the ski 10 may likewise be provided through openings in the ski 10. For example, as illustrated in Figs. 1 and 2, openings 38, 38', and 38'' are provided. As is illustrated in Fig. 3, it is envisioned that these openings may be used to attach a saddle 44. However, it will be appreciated by those skilled in the art that this configuration is exemplary only, and that other arrangements of holes or other mounting means entirely may be equally suitable. Additionally, it will be appreciated by those skilled in the art that the ski 10 may be shaped so as to comprise an integrally-formed saddle 44 that does not require mounting to the ski 10.

It will be appreciated by those skilled in the art that modifications may be made to the ski 10 without departing from the scope of the invention. For example, in one embodiment, the forward portion 12 of the runner may have a longer longitudinal length than the rearward portion 14. Still in one embodiment, the forward portion 12 may have a wider lateral width than the rearward portion 14. The relative proportions of sections A, B and C are selected so as to provide adequate floatation and steerability while operating in various types of snow.

Turning now to Fig. 2, a sectional view A-A of the ski 10 according to the present invention is illustrated. The forward portion 12 of the ski 10 extends in an upwardly direction away from a surface to be slidably engaged by the ski 10. For example, the frontmost portion 20 may extend upwardly from the surface for a height as indicated by F. In one embodiment, the rearward portion 14 of the runner extends in an upwardly direction away from a surface to be slidably engaged by the ski 10. For example, the rearmost portion 30 may extend upwardly from the surface to be traversed for a height as indicated by G.

Those skilled in the art will appreciate that a vehicle may be equipped with skis 10 according to the present invention. The vehicle can be, for example, a snowmobile. In general, the vehicle includes a frame, a seat supported by the frame for accommodating a rider of the vehicle, a rear drive means for propelling the vehicle along a surface to be traversed and one or more skis 10 attached to a front portion of the frame for slidably engaging the surface to be traversed. The skis 10 include a longitudinally extending runner having a forward portion 12, a rearward portion 14 and a middle portion 16 therebetween, the forward and rearward portions 12, 14, respectively, are formed so as to be relatively wider than the middle portion 16. (As illustrated in Fig. 1.)

In one embodiment, the rear drive means of the vehicle can include an internal combustion engine disposed generally at a front portion of the frame and supported thereby. In one embodiment, the vehicle according to the present invention is a snowmobile.

It will be appreciated by those skilled in the art that the ski 10 may be constructed in any number of ways. For example, the ski 10 may be formed by compression molding or blow molding and the ski 10 may be constructed of a variety of materials, including but not limited to plastic, steel, aluminum, and titanium. For example, materials having a predetermined hardness and gloss such as polyethylene may be used. In one embodiment, the skis 10 are manufactured of ultra high molecular weight polyethylene (UHMWPE). Of course, those skilled in the art will appreciate that the actual material used may vary without departing from the scope of the invention. Accordingly, the invention should not be limited to the materials and methods of molding described herein.

The foregoing description of the specific embodiments of the invention has been presented for the purpose of illustration and description. It is not intended to be exhaustive or to limit the invention to the precise form disclosed. Many modifications and variations are possible in light of the above teaching. It is intended that the scope of the invention be limited not with this description, but rather by the claims appended hereto.

## Claims

1. A ski for a vehicle comprising:
a longitudinally extending runner having a forward portion, a rearward portion and a middle portion therebetween, the forward and rearward portions having a wider lateral width than the middle portion.

2. A ski according to claim 1, wherein the forward portion of the runner extends in an arcuate upwardly direction away from a surface to be slidably engaged by the ski.

3. A ski according to claim 1, wherein the rearward portion of the runner extends in an upwardly direction away from a surface to be slidably engaged by the ski.

4. A ski according to claim 1, wherein the rearward portion of the runner is generally parallel with a surface to be slidably engaged by the ski.

5. A ski according to claim 1, wherein the forward portion of the runner has a longer longitudinal length than the rearward portion.

6. A ski according to claim 1, wherein the forward portion of the runner has a shorter longitudinal length than the rearward portion.

7. A ski according to claim 1, wherein the forward portion of the runner has substantially the same longitudinal length as the rearward portion.

8. A ski according to claim 1, wherein the forward portion of the runner has a wider lateral width than the rearward portion.

9. A ski according to claim 1, wherein the forward portion of the runner has a narrower lateral width than the rearward portion.

10. A ski according to claim 1, wherein the forward portion of the runner has substantially the same lateral width as the rearward portion.

11. A ski according to claim 1, wherein the forward portion of the runner beginning at a frontmost portion of the longitudinally extending runner has a lateral outwardly projecting arcuate portion extending lengthwise along a longitudinal direction toward the rearward portion of the runner for a length and then projecting inwardly towards a lateral edge of the middle portion and abutting the lateral end of the middle portion.

12. A ski according to claim 1, wherein the rearward portion of the runner beginning at a rearmost portion of the longitudinally extending runner has a lateral outwardly projecting portion extending lengthwise along a longitudinal direction toward the forward portion of the runner for a length and then projecting inwardly towards a lateral edge of the middle portion and abutting the lateral edge of the middle portion.

13. A ski according to claim 1, wherein the lateral edges of the middle portion of the runner extending along a lengthwise portion of the runner are straight.

14. A ski according to claim 1, wherein the lateral edges of the middle portion of the runner extending along a lengthwise portion of the runner extend in an arcuate inwardly direction.

15. A ski according to claim 1, further comprising mounting means for attaching the ski to the vehicle.

16. A ski according to claim 2, wherein the vehicle is a snowmobile.

17. A vehicle comprising:
a frame;
a seat supported by the frame for accommodating a rider of the vehicle;
a rear drive means for propelling the vehicle along a surface to be traversed; and
one or more skis attached to a front portion of the frame for slidably engaging the surface to be traversed;
wherein the one or more skis include a longitudinally extending runner having a forward portion, a rearward portion and a middle portion there between, the forward and rearward portions having a wider lateral width than the middle portion.

18. A vehicle according to claim 17, wherein the rear drive means comprises an internal combustion engine disposed at a front portion of the frame and supported thereby.

19. A vehicle according to claim 18, wherein the vehicle is a snowmobile.

20. A vehicle according to claim 17, wherein the forward portion of the runner extends in an arcuate upwardly direction away from a surface to be slidably engaged by the ski.

21. A vehicle according to claim 17, wherein the rearward portion of the runner extends in an upwardly direction away from a surface to be slidably engaged by the ski.

22. A vehicle according to claim 17, wherein the rearward portion of the runner is generally parallel with a surface to be slidably engaged by the ski.

23. A vehicle according to claim 17, wherein the forward portion of the runner has a longer longitudinal length than the rearward portion.

24. A vehicle according to claim 17, wherein the forward portion of the runner has a shorter longitudinal length than the rearward portion.

25. A vehicle according to claim 17, wherein the forward portion of the runner has substantially the same longitudinal length as the rearward portion.

26. A vehicle according to claim 17, wherein the forward portion of the runner has a wider lateral width than the rearward portion.

27. A vehicle according to claim 17, wherein the forward portion of the runner has a narrower lateral width than the rearward portion.

28. A vehicle according to claim 17, wherein the forward portion of the runner has substantially the same lateral width as the rearward portion.

29. A vehicle according to claim 17, wherein the forward portion of the runner beginning at a frontmost portion of the longitudinally extending runner has a lateral outwardly projecting arcuate portion extending lengthwise along a longitudinal direction toward the rearward portion of the runner for a length and then projecting inwardly towards a lateral edge of the middle portion and abutting the lateral end of the middle portion.

30. A vehicle according to claim 17, wherein the rearward portion of the runner beginning at a rearmost portion of the longitudinally extending runner has a lateral outwardly projecting portion extending lengthwise along a longitudinal direction toward the forward portion of the runner for a length and then projecting inwardly towards a lateral edge of the middle portion and abutting the lateral edge of the middle portion.

31. A vehicle according to claim 17, wherein the lateral edges of the middle portion of the runner extending along a lengthwise portion of the runner are straight.

32. A vehicle according to claim 17, wherein the lateral edges of the middle portion of the runner extending along a lengthwise portion of the runner extend in an arcuate inwardly direction.

33. A ski for a vehicle:
comprising a longitudinally extending runner having a forward portion, a rearward portion and a middle portion there between, the longitudinally extending runner having an hourglass shape.
